# EUROPÄISCHE PATENTSCHRIFT

(11) **EP 1 412 033 B1**
(45) Veröffentlichungstag und Bekanntmachung des Hinweises auf die Patenterteilung: **17.05.2006**
(21) Anmeldenummer: 02762409.7
(22) Anmeldetag: 29.07.2002
(51) Int. Cl.: A63B 63/00

(54) **SPIELGERÄT NACH ART EINER TORWAND**
GAME DEVICE
APPAREIL DE JEU

(30) Priorität: 27.07.2001 DE 10137420; 26.07.2002 DE 20211332 U
(43) Veröffentlichungstag der Anmeldung: 28.04.2004
(73) Patentinhaber: Helming, Jan, 10245 Berlin (DE)
(72) Erfinder: Helming, Jan, 10245 Berlin (DE)
(74) Vertreter: Gulde, Klaus W.
(86) Internationale Anmeldenummer: PCT/EP2002/008422
(87) Internationale Veröffentlichungsnummer: WO 2003/011404

(56) Entgegenhaltungen:
- WO-A-99/07447
- CA-A- 2 087 281
- DE-U- 29 617 783
- GB-A- 2 323 297
- US-A- 5 573 239

## Beschreibung

Die Erfindung betrifft ein Spielgerät nach Art einer Torwand, die aus auf einem unelastischen Untergrund rasterförmig angeordneten Modulen besteht, die auf eine unelastische Trägerplatte aufgebracht und mindestens an ihrer Auprallseite mit mindestens einer elastischen Kunststoffschicht abgedeckt sind, und die Module mit einer zentralen elektronischen Auswerteeinheit und diese mit einer Treffer- und Ergebnisanzeige verbunden ist.

Nach dem allgemein bekannten Vorbild der "Torwand" im ZDF sind bereits verschiedenartige Spielgeräte beschrieben worden. Im Gegensatz zu einer Torwand mit Durchschusslöchern nutzen die Spielgeräte allgemein eine feste, transportable Torwand, ggf. mit einem Rahmen, und einzelnen Trefferfeldern zum Bespielen mit einem Fußball, Handball oder Tennisball. Das Auftreffen des Balls auf ein Trefferfeld soll elektronisch angezeigt und gegebenenfalls nach einem bestimmten Programm unter Zugrundelegung bestimmter Spielregeln verarbeitet werden.

Ein Spielgerät der eingangs genannten Art ist z.B. aus GB 2 323 297 A bekannt, wobei die Trefferermittlung durch großflächig angeordnete Schalter oder eine großflächige Schaltermatrix bewirkt werden soll.

Nach der DE-A 21 04 715 wird ein Feld mit einzelnen Prallplatten vorgeschlagen, die federnd gelagert und mit mechanischen Schaltern verbunden sind. Es ist leicht einzusehen, dass eine derartige mechanische Einrichtung über keine lange Lebensdauer verfügt. Eine ähnlich Lösung wird in WO 99/07 447 vorgeschlagen, nach der großflächig Druckaufnehmer hinter einer Prallwand angeordnet sind.

Nach CA 2 087 281 A soll die Trefferermittlung durch großflächige peizoelektrische Druckaufnehmer erfolgen.

Andere Vorschläge richten sich auf die Erfassung des Ballaufschlags durch Lichtschranken. So soll nach der DE-A 35 22 002 die Durchbiegung von elastischen Trefferfeldern mechanisch auf eine Lichtschranke übertragen werden. Nach DE-A 195 08 742 erfolgt die Treffererfassung durch ein Lichtschrankenraster an einem Torrahmen. Derartige Einrichtungen sind ähnlich empfindlich wie die zuerst genannte. So müsste z. B. der Rahmen nach DE-A 195 08 742 eine solche Stabilität aufweisen, dass er Treffer übersteht, ohne dass die Lichtschranken beschädigt werden oder neu justiert werden müssen.

Nach DE-A 28 54 165 ist ein Spielgerät bekannt, bei dem die Ballbewegung zunächst von einem Netz aufgefangen wird und dann erst auf eine Prallwand mit einzelnen Trefferfeldern trifft. Der Ball muss hierbei eine gewisse Mindestgeschwindigkeit aufweisen, damit er überhaupt auf die Prallwand trifft. Über die Sensorik ist keine Aussage getroffen. Eine ähnliche Lösung beschreibt DE 296 17 783 U1, nach der Sensoren zwischen zwei elastischen Platten aufgebracht sind oder sich Rüttelsensoren auf einzelnen Platten befinden, die lose aufgehängt sind.

In WO 87/06848 wird ein Spielgerät für das Tennistraining beschrieben, bei dem Druckaufnehmer punktförmig in zwei Ebenen vor einer massiven Prallwand angeordnet sind. Derartige Druckaufnehmer sind ebenfalls empfindlich gegenüber zu harten Stößen. Sie liefern außerdem nur dann eine Anzeige, wenn sie entsprechend dicht angeordnet sind oder in wenig elastisches Material eingebettet sind.

Die verschiedenen Vorschläge haben bisher nicht zu einem realisierbaren Spielgerät der beschriebenen Art geführt.

Der Erfindung liegt die Aufgabe zugrunde, ein Spielgerät anzugeben, das einerseits leicht und transportabel ist, andererseits eine sichere Treffererfassung bei verschieden harten Aufprallimpulsen garantiert und eine hohe Lebensdauer verspricht.

Erfindungsgemäß wird die Aufgabe gelöst durch die Merkmale des Anspruchs 1. Zweckmäßige Ausgestaltungen sind Gegenstand der Unteransprüche.

### Danach

- bestehen die Module ihrerseits aus je einem Sensorfeld nach Art einer Folientastatur, wobei in dem Sensorfeld Leitungen entsprechend den Zeilen und Spalten eines Modulrasters vorhanden sind, die jeweils an einem Steckverbinder enden,
- ist jedes einzelne Modul oder jeweils wenige Module über die Steckverbinder mit einem eigenen Elektronikbaustein verbunden, der einen Mikroprozessor, einen Speicher und eine dezentrale Stromversorgung für die angeschlossenen Module enthält,
- sind die Elektronikbausteine über einen Datenbus mit der zentralen elektronischen Auswerteeinheit und die dezentralen Stromversorgungen mit einer zentralen Stromversorgung verbunden und
- besteht die Kunststoffschicht aus einem Schaumstoff.

Zweckmäßig sind die dezentralen Stromversorgungen spannungsgeregelt. Die zentrale Stromversorgung kann durch einen Transformator realisiert werden.

Weiterhin ist zweckmäig vorgesehen, dass die zentrale elektronische Auswerteeinheit über einen seriellen Datenausgang ausgelesen wird.

Jede Signalgabe an einem Rasterpunkt eines Moduls wird dann zunächst in dem Speicher des zugehörigen Elektronikbausteins gespeichert. Anschließend wird das Signal unter Nennung eines Schalterkodes und eines Identifizierungskodes des Elektronikbausteins sowie gegebenenfalls weiterer Daten an die zentrale elektronische Auswerteeinheit weitergeleitet. Weitere Daten können z.B. die Dauer der Signalgabe oder die Anzahl der Aufprallschwingungen sein, aus denen sich weitere Informationen ableiten lassen. Die zentrale elektronische Auswerteeinheit kann aus mehreren Signalen auch den genauen Ort der Druckgabe interpolieren.

Dieser Aufbau des Spielgerätes hat den Vorteil, dass weder hohe Impedanzen entstehen noch eine Vielzahl von Leitungszuführungen zu einer zentralen Auswerteeinheit nötig ist. Außerdem wird die Montagezeit für eine großflächige Anlage verkürzt und ein schneller Service bei einem eventuellen Ausfall eines Moduls ermöglicht.

Vorzugsweise besteht die Kunststoffschicht auf der Aufprallseite aus PUR oder Silikon.

Für die Trägerplatte kann beispielsweise aus einem der Materialien mikroporöses Aluminium, Holz, glasfaserverstärktes Epoxidharz, Polykarbonat ausgewählt werden.

Die Anzeige kann, muss aber nicht in die Torwand integriert sein. Die Sensorfelder können verschieden groß sein, angepasst an die vorgegebenen Spielregeln.

Die Erfindung hat den Vorteil, dass die Sensorfelder jeden Aufprall sicher erfassen, auch wenn sie mit verschieden großer Ballgeschwindigkeit erfolgen. Trotzdem unterliegen die Sensorfelder nur einer geringen Belastung. Die unelastische Rückwand mit den davor angeordneten elastisch bedämpften Sensorfeldern sorgt außerdem dafür, dass pro Treffer nur ein einzelner Zählimpuls erzeugt wird. Andernfalls käme es beim Zurückfedern der Rückwand zu einem zweiten Zählimpuls, der eine falsche Trefferzahl ergeben würde. Zusätzlich kann zur Sicherheit hierfür auch eine Softwarelösung in Betracht gezogen werden.

Der erfindungsgemäße Aufbau hat weiter den Vorteil, dass von der Torwand ein Großteil der Schussenergie aufgenommen wird, so dass der Ball mit sehr viel geringerer Geschwindigkeit zurückkommt als er geschossen wurde. Dies erhöht den Spielwert, da das Spielgerät so auch für kleine Räumlichkeiten geeignet ist und der Ball immer mit einer Geschwindigkeit zurückkommt, die einen sofortigen weiteren Schuss erlaubt.

Die Treffer werden durch ein Rechnerprogramm verarbeitet, das die Speicherung und Summierung bzw. die Bewertung von Schussserien einzelner Spieler oder Spielergruppen bei Berücksichtigung des vorangegangenen Spielverlaufs erlaubt. Dabei lassen sich verschiedene Spielarten mit spezifischen Regeln einstellen. So kann z. B. mit zwei Spielern nach ähnlichen Regeln wie beim Dart gespielt werden.

Die Sensorfelder und die verwendeten Kunststoffe können transparent sein, so dass die hintere, unelastische Wand selbst als Treffer- und Ergebnisanzeige ausgebildet sein kann oder Trefferfelder, die bewusst getroffen werden sollen, vor einem Schuss leuchten können.

Die Erfindung soll nachstehend anhand eines Ausführungsbeispiels näher erläutert werden. In den Zeichnungen zeigen
- Fig. 1: eine Gesamtansicht auf ein Spielgerät,
- Fig. 2: einen Ausschnitt aus einer Torwand mit aufgebrachten Modulen in Draufsicht,
- Fig. 3: die Torwand gemäß Fig. 2 im Schnitt,
- Fig. 4: eine Prinzipschaltung zu einer Variante der Zusammenschaltung der Module,
- Fig. 5: einen Ausschnitt aus einem Sensorfeld,
- Fig. 6: einen Querschnitt durch ein Sensorfeld und

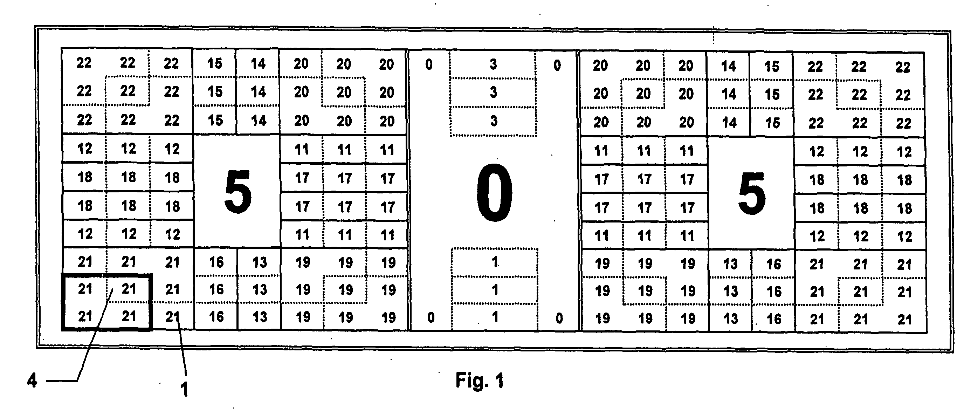

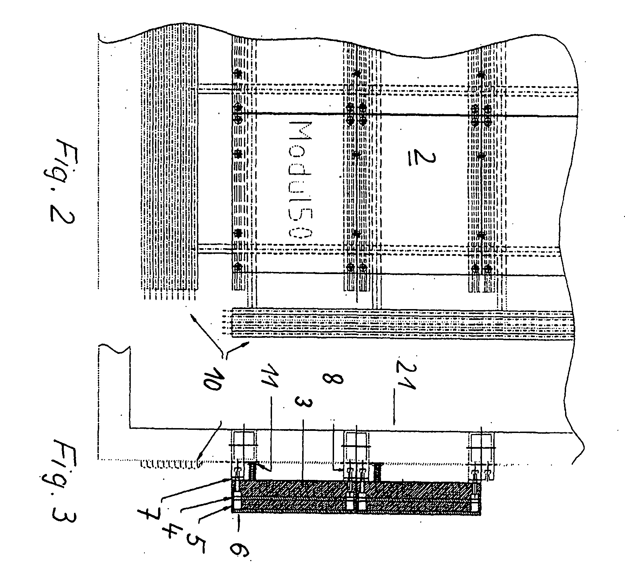

Fig. 1 zeigt zunächst eine Gesamtansicht auf ein als Torwand gestaltetes Spielgerät. Die Torwand ist modular aufgebaut, das heißt, dass jeweils mehrere Trefferfelder 1 zu einem Modul 2 gehören. Der Aufbau der Torwand sowie der eines Moduls 2 sind sind aus den Fig. 2 und 3 ersichtlich. Die Module 2 bestehen aus einer Trägerplatte 3 aus festem, unelastischem Material, auf das ein Sensorfeld 4 nach Art einer Folientastatur aufgebracht ist. Darüber befinden sich ein Dämpfungsmaterial 5 und eine Designfolie 6. Die Designfolie 6 kann sektoral in der Größe der Module 2 angeordnet sein oder zusammenhängend die gesamte Fläche der Torwand bedecken. Die Module 2 werden über einen Gummiblock 7 mit Trägerprofilen 8 einer Rückwand 9 verschraubt. Die gesamte Torwand kann transportabel gestaltet sein.

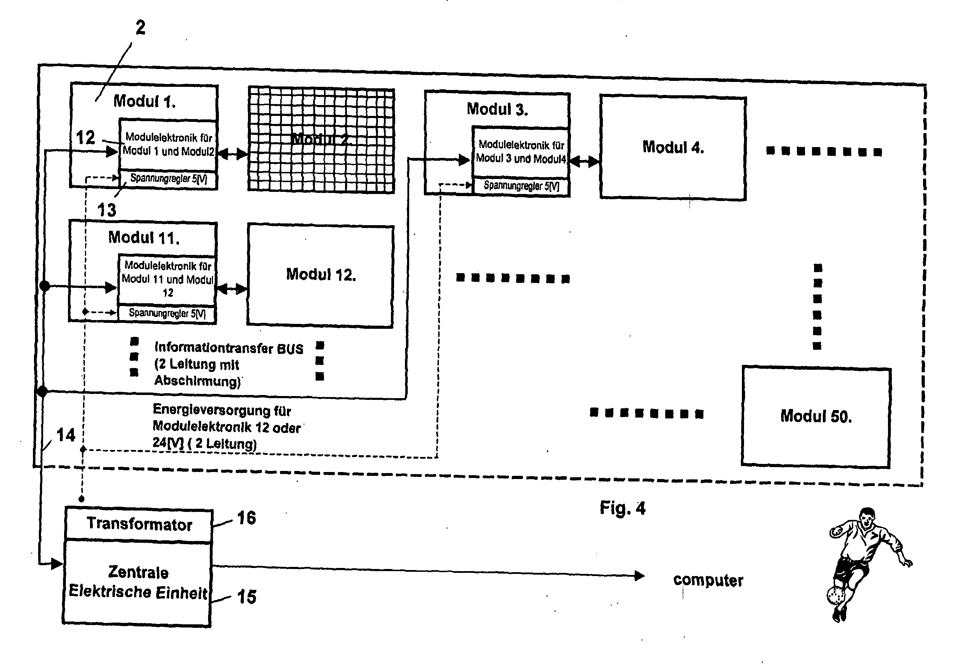

Nach Fig. 4 ist die Torwand in fünfzig einzelne Module 2 aufgeteilt, wobei fünf Zeilen und zehn Spalten entstehen. Jedes Modul 2 enthält ein Sensorfeld 4 nach Art einer Folientastatur, wiederum mit Zeilen und Spalten, wie es für das zweite Modul 2 in der obersten Reihe angedeutet ist. Jeweils zwei Module 2 bzw. zwei Sensorfelder 4 sind zeilen- und spaltenweise über Steckverbinder 11 mit einem Elektronikbaustein 12 verbunden, der einen Mikroprozessor und einen Speicher enthält. Außerdem enthält er eine spannungsgeregelte Stromversorgung 13 für die jeweils angeschlossenen zwei Module 2 (Spannung = 5 V). Ausgangsseitig sind die Elektronikbausteine 12 über einen Datenbus 14 mit einer zentralen elektronischen Auswerteeinheit 15 verbunden. Der Datenbus 14 ermöglicht eine kurze Zugriffszeit zu den einzelnen Modulen 2 sowie eine schnelle Verarbeitung der Information von den Modulen 2. Die Stromversorgungen 13 der Elektronikbausteine 12 sind mit einer zentralen Stromversorgung in Form eines Transformators 16 verbunden. Die zentrale elektronische Auswerteeinheit 15 kann über eine serielle Schnittstelle mit einem Rechner verbunden werden.

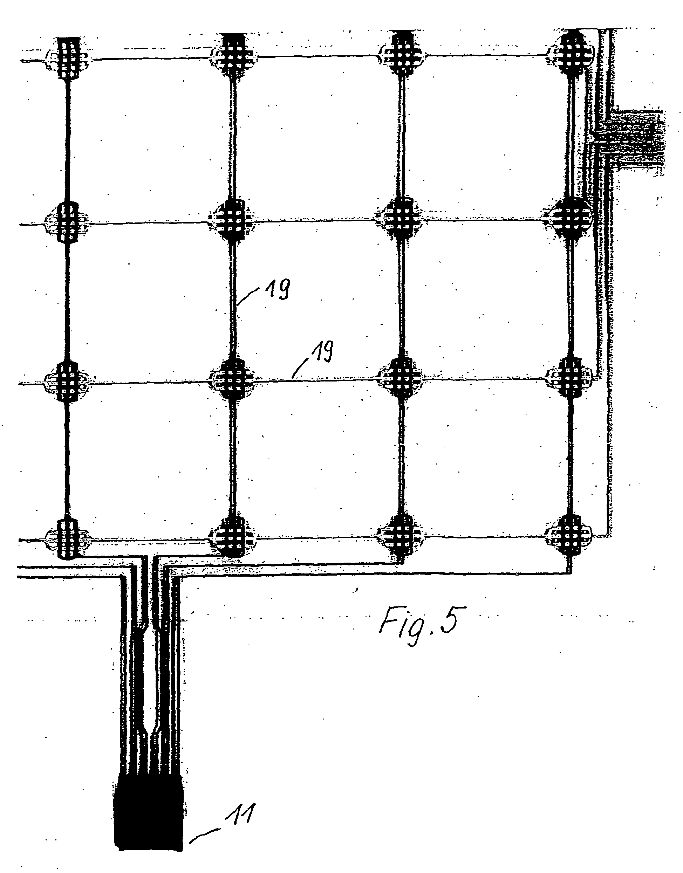

Fig. 5 zeigt einen Ausschnitt aus einem einzelnen Sensorfeld 4 mit beispielsweise sechs Zeilen und sechs Spalten. Das Sensorfeld 4 besteht aus zwei Kunststoff-Folien 17, 18, die gleichermaßen mit Leiterzügen 19 bedruckt und um 90° zueinander versetzt übereinander gelegt sind.

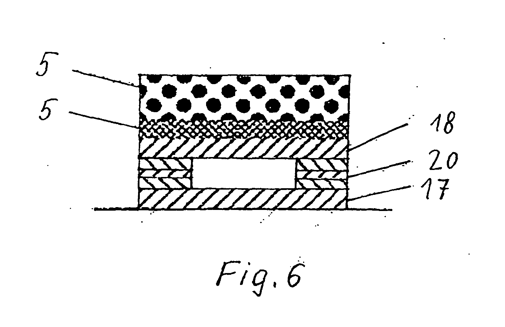

Fig. 6 zeigt den zugehörigen Schichtaufbau. Durch eine zwischengelegte weitere Folie 20 oder durch eine Klebstoffschicht zwischen den Rasterpunkten werden die Leiterzüge 19 dabei so beabstandet, dass sie sich nur bei einer Druckbelastung an einem Kreuzungspunkt berühren und eine leitende Verbindung herstellen, wodurch bei Anliegen einer Spannung an den Leitzügen 19 ein Signalimpuls erzeugt wird. Um bei einer Druckbeeinflussung einen guten Kontakt zu ermöglichen, sind die Leiterzüge 19 an den Rasterpunkten, an denen sie sich kreuzen, in mehrere parallele Leitungen aufgespreizt. An zwei Seiten des Sensorfeldes 4 sind die Leiterzüge 19 jeweils zu einem Steckverbinder 11 geführt.

Jede Signalgabe an einem Rasterpunkt eines Sensorfeldes 4 wird zunächst in dem Speicher des zugehörigen Elektronikbausteins 12 gespeichert. Anschließend wird das Signal mindestens unter Nennung eines Schalterkodes und eines Identifizierungskodes des Elektronikbausteins 12 über den Datenbus 14 an die zentrale elektronische Auswerteeinheit 15 weitergeleitet, die die Signale weiterverarbeitet.

## Patentansprüche

1. Spielgerät nach Art einer Torwand, die aus auf einem unelastischen Untergrund rasterförmig angeordneten Modulen (2) besteht, die auf eine unelastische Trägerplatte (3) aufgebracht und mindestens an ihrer Auprallseite mit mindestens einer elastischen Kunststoffschicht (5) abgedeckt sind, und die Module mit einer zentralen elektronischen Auswerteeinheit (15) und diese mit einer Treffer- und Ergebnisanzeige verbunden ist, **dadurch gekennzeichnet, dass**
- die Module (2) ihrerseits aus je einem Sensorfeld (4) nach Art einer Folientastatur bestehen, wobei in dem Sensorfeld (4) Leitungen (19) entsprechend den Zeilen und Spalten eines Modulrasters vorhanden sind, die jeweils an einem Steckverbinder (11) enden,
- jedes einzelne Modul (2) oder jeweils wenige Module (2) über die Steckverbinder (11) mit einem eigenen Elektronikbaustein (12) verbunden sind, der einen Mikroprozessor, einen Speicher und eine dezentrale Stromversorgung (13) für die angeschlossenen Module (2) enthält,
- die Elektronikbausteine (12) über einen Datenbus (14) mit der zentralen elektronischen Auswerteeinheit (15) und die dezentralen Stromversorgungen (13) mit einer zentralen Stromversorgung verbunden sind und
- die Kunststoffschicht (5) aus einem Schaumstoff besteht.

2. Spielgerät nach Anspruch 1,
**dadurch gekennzeichnet, dass**
die dezentralen Stromversorgungen (13) spannungsgeregelt sind.

3. Spielgerät nach Anspruch 1 oder 2,
**dadurch gekennzeichnet, dass**
die zentrale Stromversorgung durch einen Transformator (16) realisiert ist.

4. Spielgerät nach einem der Ansprüche 1 bis 3,
**dadurch gekennzeichnet, dass**
die zentrale elektronische Auswerteeinheit (15) einen seriellen Datenausgang aufweist.

5. Spielgerät nach einem der vorhergehenden Ansprüche,
**dadurch gekennzeichnet, dass**
die Leitungen (19) im Modul (2) im Bereich ihrer Kreuzungspunkte aufgespreizt sind.

6. Spielgerät nach einem der vorhergehenden Ansprüche,
**dadurch gekennzeichnet, dass**
der Schaumstoff ein Polyurethanschaumstoff ist.

7. Spielgerät nach einem der ansprüche 1 bis 5,
**dadurch gekennzeichnet, dass**
der Schaumstoff ein Silikonschaumstoff ist.

8. Spielgerät nach einem der vorhergehenden Ansprüche,
**dadurch gekennzeichnet, dass**
die Trägerplatte (3) aus einem der Materialien mikroporöses Aluminium, Holz, glasfaserverstärktes Epoxidharz, Polykarbonat besteht.

9. Spielgerät nach einem der vorhergehenden Ansprüche,
**dadurch gekennzeichnet, dass**
die Module (2) an Ihrer Aufprallseite mit einer Designfolie (6) beklebt sind.

10. Spielgerät nach einem der vorhergehenden Ansprüche,
**dadurch gekennzeichnet, dass**
die Torwand als ganzes an Ihrer Aufprallseite mit einer Designfolie (6) beklebt ist.

11. Spielgerät nach einem der vorhergehenden Ansprüche,
**dadurch gekennzeichnet, dass**
die Module (2) verschieden groß sind.

## Claims

1. A toy in the form of a goal wall, which consists of modules (2) which are arranged in a grid on an inelastic base surface, which are attached to an inelastic mounting panel (3) and which are covered at least on their impact side with at least one elastic plastic layer (5), and the modules are connected to one central electronic evaluation unit (15) which is connected with a strike and results display, **characterised in that**
- the modules (2) themselves consist in each case of one sensor field (4) in the form of a membrane keyboard, whereby in the sensor field (4), wires (19) are provided which correspond to the lines and columns of a module grid, each of which ends at a pin-and-socket connector (11)
- each individual module (2) or several modules (2) in each case, are connected via the pin-and-socket connector (11) with an individual electronic component (12), which contains a microprocessor, a memory and a decentralised power supply (13) for the connected modules (2)
- the electronic components (12) are connected via a data bus (14) with the central electronic evaluation unit (15) and the decentralised power supplies (13) with a central power supply, and
- the plastic layer (5) consists of a foam material

2. A toy according to claim 1,
**characterised in that**
the decentralised power supplies (13) are voltage controlled.

3. A toy according to claim 1 or 2,
**characterised in that**
the central power supply is provided via a transformer (16)

4. A toy according to any one of claims 1 to 3,
**characterised in that**
the central electronic evaluation unit (15) comprises a serial data output.

5. A toy according to any one of the above claims,
**characterised in that**
the wires (19) in the module (2) are splayed in the area of their crossing points.

6. A toy according to any one of the above claims,
**characterised in that**
the foam material is polyurethane foam.

7. A toy according to any one of claims 1 to 5,
**characterised in that**
the foam is a silicon foam.

8. A toy according to any one of the above claims,
**characterised in that**
the mounting panel (3) consists of one of the following materials: micro-porous aluminium, wood, glass-fibre reinforced epoxy resin, or polycarbonate.

9. A toy according to any one of the above claims,
**characterised in that**
the modules (2) are adhered on their impact side with a design foil (6).

10. A toy according to any one of the above claims,
**characterised in that**
the goal wall as a whole is adhered on its impact side with a design foil (6).

11. A toy according to any one of the above claims,
**characterised in that**
the modules (2) have different sizes.

## Revendications

1. Appareil de jeu à la façon d'une paroi de but qui se compose de modules (2) disposés en forme de matrice sur un substrat non élastique et qui sont placés sur une plaque support (3) non élastique et sont couverts, au moins sur leur côté d'impact, d'au moins une couche de matière plastique (3) élastique, et les modules sont raccordés à une unité d'analyse (15) électronique centrale et celle-ci est raccordée à un affichage de tirs réussis et des résultats, **caractérisé en ce que**
- les modules (2) se composent de leur côté respectivement d'un champ de capteur (4) à la façon d'un clavier à effleurement, des lignes (19) existant dans le champ de capteur (4) en fonction des rangées et des colonnes d'une matrice de modules et se terminant respectivement au niveau d'un connecteur (11),
- chaque module (2) individuel ou respectivement quelques modules (2) sont raccordés, via les connecteurs (11), à un composant électronique (12) qui contient un microprocesseur, une mémoire et une alimentation électrique (13) décentralisée pour les modules (2) raccordés,
- les composants électroniques (12) sont raccordés, via un bus de données (14), à l'unité d'analyse (15) électronique centrale, et les alimentations électriques (13) décentralisées sont raccordées à une alimentation électrique centrale et
- la couche de matière plastique (5) se compose d'une mousse.

2. Appareil de jeu selon la revendication 1,
**caractérisé en ce que** les alimentations électriques (13) décentralisées sont réglées en tension.

3. Appareil de jeu selon la revendication 1 ou 2,
**caractérisé en ce que**
l'alimentation électrique centrale est réalisée par un transformateur (16).

4. Appareil de jeu selon une des revendications 1 à 3,
**caractérisé en ce que**
l'unité d'analyse (15) électronique centrale présente une sortie de données sérielle.

5. Appareil de jeu selon une des revendications précédentes,
**caractérisé en ce que**
les lignes (19) dans le module (2) sont écartées dans la zone de leurs points de croisement.

6. Appareil de jeu selon une des revendications précédentes,
**caractérisé en ce que**
la mousse est une mousse polyuréthanne.

7. Appareil de jeu selon une des revendications 1 à 5,
**caractérisé en ce que**
la mousse est une mousse silicone.

8. Appareil de jeu selon une des revendications précédentes,
**caractérisé en ce que**
la plaque support (3) est constituée d'un des matériaux suivants : aluminium microporeux, bois, résine époxy renforcée de fibre de verre, polycarbonate.

9. Appareil de jeu selon une des revendications précédentes,
**caractérisé en ce que**
une feuille à motif (6) est collée sur les modules (2), sur leur côté d'impact.

10. Appareil de jeu selon une des revendications précédentes,
**caractérisé en ce que**
une feuille à motif (6) est collée sur la paroi de but dans son ensemble, sur son côté d'impact.

11. Appareil de jeu selon une des revendications précédentes,
**caractérisé en ce que**
les modules (2) sont de dimensions différentes.
